## Europäisches Patentamt

## European Patent Office

## Office européen des brevets

(11) Veröffentlichungsnummer: **0 224 802 B1**

# EUROPÄISCHE PATENTSCHRIFT

(45) Veröffentlichungstag der Patentschrift:
02.05.90

(51) Int. Cl.⁴: **G09B 29/00**

(21) Anmeldenummer: **86116041.4**

(22) Anmeldetag: **20.11.86**

(54) **Planungsgerät.**

(30) Priorität: **23.11.85 DE 3541519**

(43) Veröffentlichungstag der Anmeldung:
**10.06.87 Patentblatt 87/24**

(45) Bekanntmachung des Hinweises auf die Patenterteilung:
**02.05.90 Patentblatt 90/18**

(84) Benannte Vertragsstaaten:
**FR GB**

(56) Entgegenhaltungen:
**EP-A- 0 123 890**
**EP-A- 0 125 842**
**DE-A- 1 911 920**
**DE-A- 2 802 183**
**DE-A- 3 011 729**
**FR-A- 2 414 764**
**US-A- 3 735 501**

(73) Patentinhaber: **Edding AG, Kornkamp 40,
D-2070 Ahrensburg(DE)**

(72) Erfinder: **Kallenberg, Rüdiger, Kornkamp 40,
D-2070 Ahrensburg(DE)**

(74) Vertreter: **Dipl.-Ing. H. Hauck Dipl.-Phys. W. Schmitz
Dipl.-Ing. E. Graalfs Dipl.-Ing. W. Wehnert Dr.-Ing. W.
Döring, Neuer Wall 41, D-2000 Hamburg 36(DE)**

ACTORUM AG

## Beschreibung

Die Erfindung bezieht sich auf ein Planungsgerät mit einer eine Schaufläche aufweisenden Tafel, die an einer Wand, einem Gestell oder dergleichen anbringbar ist.

Es sind Planungstafeln bekannt, die mit Steckkarten betrieben werden. Die mit unterschiedlichen Farben versehenen Steckkarten werden von entsprechenden Aufnahmeschlitzen in der Planungstafel aufgenommen. Es ist auch bekannt, statt der Steckkarten aus Papier oder Karton magnetische Anzeigeelemente zu verwenden, die von Hand an der magnetisch wirkenden Schaufläche lösbar anbringbar sind. Auch derartige Anzeigeelemente müssen vor Gebrauch beschriftet werden.

Es ist auch bekannt, bei Planungsaufgaben eine elektronische Datenverarbeitung einzubeziehen. Bei herkömmlichen Systemen wird der gewünschte Inhalt der Planungstafeln abgelesen und in den entsprechend programmierten Computer mit Hilfe einer üblichen Tastatur eingelesen. Ein derartiges Verfahren ist jedoch verhältnismäßig aufwendig und nicht fehlerfrei.

Der Erfindung liegt die Aufgabe zugrunde, ein Planungsgerät zu schaffen, das als individuell ausgestaltbares Planungsmittel verwendet werden kann, bei dem ein Computer die Position der Anzeigeelemente sowie ihren Inhalt unabhängig von ihrer Lage auf eine Schaufläche erkennen kann.

Bei der Erfindung sind die Anzeigeelemente von Hand wahlweise an beliebigen Kreuzungspunkten der elektrischen Leiter auf der Planungstafel anbringbare Teile. Sie können magnetisch sein, um an der magnetisch wirkenden Schaufläche angebracht zu werden. Zweckmäßigerweise sind hingegen ein oder zwei Haltestifte an der Rückseite der Anzeigeelemente angebracht, die mit passenden Löchern in der Schaufläche zusammenwirken und die zugleich mit den elektrischen Leitern der Tafel in Kontakt treten. In der Planungstafel ist eine Matrix elektrischer Leiter angeordnet derart, daß sie an den Kreuzungspunkten gegeneinander isoliert sind. Die Leiter können unmittelbar an der Oberfläche der Schaufläche angebracht sein, sie werden jedoch zweckmäßig mehr oder weniger versenkt angeordnet. Die Leiter sind sämtlich an einen Computer angeschlossen. Mit Hilfe des Computers können daher Impulse auf alle oder jeden beliebigen Leiter übertragen werden. Umgekehrt können die Leiter auch zur Übertragung von Impulsen der Anzeigeelemente auf den Computer dienen.

Die Anzeigeelemente enthalten eine LCD-Anzeige und einen programmierbaren Mikroprozessor. Die Anzeigeelemente sind daher elektrisch aktive Teile. Mit der LCD-Anzeige der Anzeigeelemente können Zeichen, Ziffern, Buchstaben und Kombinationen davon angezeigt werden. Die Ansteuerung der LCD-Displays erfolgt über den Mikroprozessor. Die Stromquelle zum Betrieb des Mikroprozessors und der LCD-Anzeige kann im Anzeigeelement untergebracht sein. Alternativ kann an die elektrischen Leiter eine Stromquelle angeschlossen werden, so daß die elektrische Energie über die Kreuzungspunkte in das Anzeigeelement einkoppelbar ist.

Jedes Anzeigeelement erhält eine gewünschte Kennung oder einen Code, der in bekannter Weise in den Mikroprozessor einprogrammierbar ist. Die Programmierung kann z.B. derart erfolgen, daß das Anzeigeelement auf einen Kreuzungspunkt gesetzt wird und der Computer den Mikroprozessor mit der gewünschten Kennung oder dem gewünschten Code programmiert. Ebenso wird diese Kennung in den Computer eingegeben. Tastet nun der Computer das Gitter der Leiter ab, kann er feststellen, an welchen Kreuzungspunkten welche Anzeigeelemente angeordnet sind und welche Kreuzungspunkte leer sind. Zu diesem Zweck muß zwischen dem Mikroprozessor der Anzeigeelemente und den Leitern der Schaufläche eine Signalankopplung stattfinden. Über eine geeignete induktive und/oder kapazitive Ankopplung werden die Impulse vom Computer auf den betreffenden Mikroprozessor übertragen. Bevorzugt ist eine galvanische Verbindung, da sie für die Stromversorgung der Anzeigeelemente günstiger ist. Damit der Computer "weiß", daß er ein bestimmtes Anzeigeelement abtastet, muß eine entsprechende Signalmeldung vom Anzeigeelement zurück zum Computer stattfinden. Ein Abfragesignal vom Computer muß daher mit einer Antwort des Mikroprozessors des Anzeigeelements beantwortet werden. Diese Antwort enthält zumindest den Code des Anzeigeelements. Mit dem gleichen Abfragesignal und einem anderen Abfragesignal des Computers kann außerdem der Speicherinhalt des Mikroprozessors im Hinblick auf die LCD-Anzeige abgefragt werden. Auf diese Weise ist es möglich, nicht nur die Orte der Anzeigeelemente und die Leerstellen der Schaufläche vom Computer zu erfassen, sondern auch die Anzeigeinhalte der Anzeigeelemente. Schließlich ist es weiterhin möglich, durch Überspielen von Anzeigesignalen vom Computer den Anzeigeinhalt in der LCD-Anzeige vorzugeben oder zu verändern. Wenn die Anzeigeelemente Programmiertasten aufweisen, können sie auch unmittelbar programmiert werden. Zu diesem Zweck können sie auf einen beliebigen Kreuzungspunkt der Leiter gesetzt werden, um mit elektrischer Energie versorgt zu werden.

Mit Hilfe eines Computers kann daher die Schaufläche des erfindungsgemäßen Planungsgeräts im Hinblick auf den jeweiligen Ist-Zustand abgefragt werden. Unabhängig davon, ob die Bedienungsperson von Hand einzelne Anzeigeelemente in ihrer Lage verändert oder auch einige fortnimmt und andere hinzufügt, kann mit Hilfe des Computers eine Wiedergabe der Daten an einem entfernten Ort erfolgen, beispielsweise über Drucker, Monitoren usw. Außerdem kann eine Verarbeitung der Daten des Planungsgerätes in einer EDV-Anlage erfolgen. Umgekehrt kann mit Hilfe eines Computers ein gewünschter Anzeigeinhalt auf den Speicher der Mikroprozessoren der betreffenden Anzeigeelemente übertragen werden.

Im Fall daß die Anzeigeelemente z.B. mit Steckerstiften versehen sind, die in entsprechenden Steckbuchsen in der Schaufläche einsteckbar sind, um eine Verbindung mit den elektrischen Leitern an den Kreuzungspunkten herzustellen, dient diese Verbindung auch der Halterung der Anzeigeelemente an der Schaufläche der Planungstafel.

Die Erfindung wird nachfolgend anhand von Zeichnungen näher erläutert.

Fig. 1 zeigt schematisch in perspektivischer Ansicht ein Planungsgerät nach der Erfindung.

Fig. 2 zeigt schematisch in perspektivischer Ansicht ein Anzeigeelement des Planungsgeräts nach Fig. 1.

Fig. 3 zeigt eine Endansicht des Anzeigeelements nach Fig. 2.

Fig. 4 zeigt ein Blockschaltbild zum Anzeigeelement nach Fig. 2.

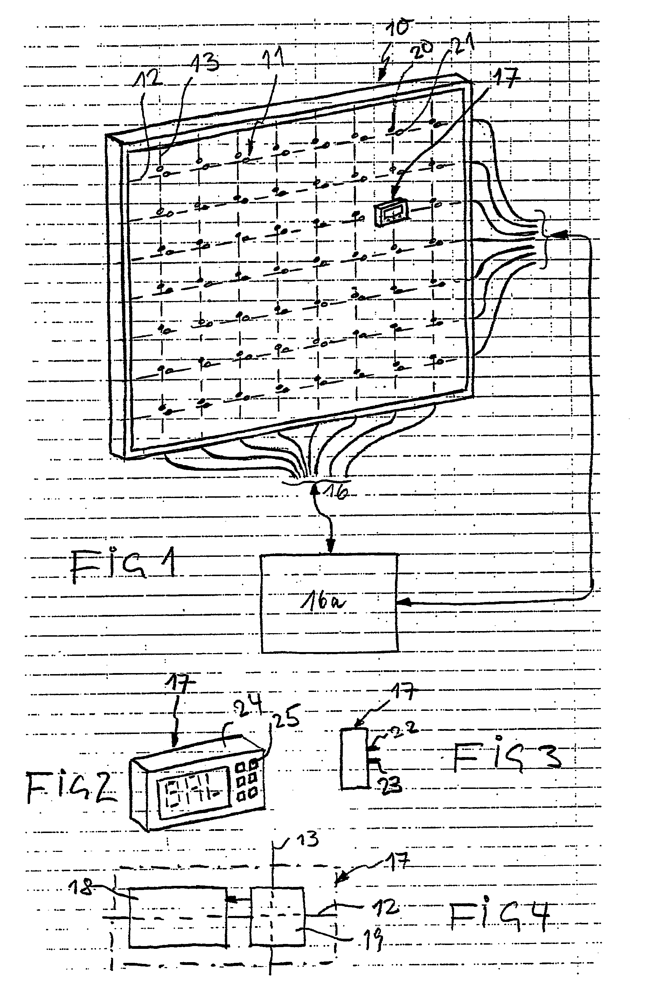

In Fig. 1 ist eine mobile Tafel 10 zu erkennen, die z.B. an einer Wand anbringbar ist. Die Tafel 10 weist eine Vorderseite auf, die eine Schaufläche bildet. In der Tafel 10 ist versenkt in nicht-leitendem Material eine Matrix 11 von elektrisch leitenden Zeilenleitern 12 und Spaltenleitern 13 angeordnet. Die Leiter 12, 13, die an den Kreuzungspunkten 14 gegeneinander isoliert sind, können auch auf der Oberfläche der Tafel angeordnet sein. Wie bei 15 und 16 dargestellt, sind sämtliche Leiter 12, 13 mit einem Computer 16a verbunden. Auf der Schaufläche der Tafel 10 können einzelne Anzeigeelemente, von denen nur ein einziges bei 17 gezeigt ist, angeordnet werden. In die Schaufläche der Tafel sind pro Kreuzungspunkt der Leiter 12, 13 ein Paar Löcher 20, 21 geformt; sie führen zu den Leitern 12, 13 und dienen zur Aufnahme von Steckstiften 22, 23 an der Rückseite der Elemente 17 (Fig. 3). Dadurch ist das Anzeigeelement gehaltert. Gleichzeitig wird jedoch eine elektrische Verbindung mit dem Anzeigeelement hergestellt.

In Fig. 2 ist das Anzeigeelement 17 etwas vergrößert dargestellt. Es weist ein quaderförmiges Gehäuse 24 auf, in dem eine Anordnung 18 aus LCDs und ein Mikroprozessor 19 (Fig. 4) mit programmierbarem Speicher aufgenommen sind. Der Mikroprozessor läßt sich über eine Tastatur 25 programmieren. Mit Hilfe des Mikroprozessors 19 wird die LCD-Anzeige angesteuert, d.h. der Anzeigeinhalt auf die Anzeige 18 überspielt. Es versteht sich, daß anstelle einer LCD-Anzeige auch eine andere elektronisch ansteuerbare Anzeigeanordnung verwendet werden kann. Der Mikroprozessor 19 ist über die Stifte 22, 23 an die Leiter 12, 13 galvanisch ankoppelbar. Es kann auch ein Steckerstift so ausgeführt werden, daß er mit getrennten Leiterabschnitten mit beiden Leitern 12, 13 in Kontakt tritt, um sie mit dem Mikroprozessor 19 zu verbinden. Die Stromversorgung für die Leiter 12, 13 kann ebenfalls über den Block 16a erfolgen. Dies ist im einzelnen nicht dargestellt.

Das gezeigte Planungsgerät arbeitet wie folgt.

In der Abszisse des Koordinatensystems, das durch die Leiter 12, 13 aufgespannt ist, liegt beispielsweise die Zeitachse. In der Ordinate sind z.B. einzelne Abteilungen eines Fertigungsbetriebes aufgetragen, durch die z.B. ein Werkstück oder ein Produkt hindurchlaufen soll. Die Anzeigeelemente 17 dienen z.B. zur Kennzeichnung dieses Werkstückes oder dieses Produktes. Die das Produkt definierenden Daten können mit Hilfe des Mikroprozessors 19 über die LCD-Anzeige 18 angezeigt werden. Diese Anzeige, z.B. wie gezeigt "8 AL", kann bei Anordnung eines betreffenden Anzeigeelements 17 an einem Kreuzungspunkt ständig erfolgen. Eine Anzeige kann jedoch auch erst über eine entsprechende Auslösung über den Computer 16 erfolgen. Dieser steuert den Mikroprozessor 19 an. Entweder wird dieser nur angestoßen, um seinerseits einen Speicherinhalt auf die Anzeige 18 zu übertragen. Alternativ kann die Anzeige über den Mikroprozessor 19 auch unmittelbar vom Computer 16 aus erfolgen. Der Mikroprozessor 19 hat darüber hinaus einen Speicher, in den eine bestimmte Kennung für das jeweilige Anzeigeelement 17 eingegeben wird, damit der Computer 16 das Anzeigeelement auffinden kann, wenn er die einzelnen Spalten- und Zeilenleiter abtastet. Wird der Mikroprozessor 19 eines Anzeigeelements abgetastet, gibt er sein Kennungssignal auf den Computer 16, der mithin feststellen kann, an welchen Kreuzungspunkten welche Anzeigeelemente 17 aufzufinden sind. Leerstellen werden ebenfalls als solche ermittelt. Dadurch kann mit Hilfe des Computers 16 der jeweilige Zustand der Planungstafel 10 vom Computer 16 erfaßt und erforderlichenfalls durch eine nicht gezeigte Anzeige angezeigt werden. Vom Computer 16 kann wiederum eine Weiterverarbeitung der Planungsdaten der Tafel 10 erfolgen mit Hilfe einer an sich bekannten EDV-Anlage.

Der Computer 16 kann auch dazu benutzt werden, den Mikroprozessor 19 zu programmieren, beispielsweise auf einen gewünschten Anzeigeinhalt für die Anzeige 18 und/oder für eine gewünschte Kennung. Die Anzeigeelemente 17 können auch unmittelbar über die Tastatur 25 programmiert werden. Zu diesem Zweck können sie an einen beliebigen Kreuzungspunkt der Leiter 12, 13 gesetzt werden, damit sie mit der notwendigen Energie versorgt werden.

Der Computer 16a, der ebenfalls klein und speziell für die Funktion der Tafel ausgelegt sein kann, wird zweckmäßigerweise der einzelnen Tafel zugeordnet. Er ist ferner so ausgelegt, daß er mit üblichen Computern von EDV-Anlagen kommunizieren kann.

**Patentansprüche**

1. Planungsgerät mit einer eine Schaufläche aufweisenden Planungstafel, die horizontal und vertikal gitterartig unterteilt ist, und einer Anzahl von Hand steckbaren Anzeigeelementen und einer Vorrichtung, mit der der Anzeigeninhalt und die Position der Anzeigeelemente auf der Schaufläche ermittelt wird und die ihrerseits mit einem elektronischen Datenverarbeitungssystem verbunden ist, dadurch gekennzeichnet, daß die Planungstafel (10) ein Koordinatennetz elektrischer Leiter (12, 13) aufweist und die Anzeigeelemente (17) eine LCD-Anzeige (18) und jeweils einen Mikroprozessor (19) mit programmierbarem Speicher zur Ansteuerung der LCD-Anzeige aufweisen, und die Mikroprozessoren bei Positionierung der Anzeigenelemente an den Kreuzungspunkten der elektrischen Leiter mit einer Stromquelle und einem Rechner (16a) verbunden sind.

2. Planungsgerät nach Anspruch 1, dadurch gekennzeichnet, daß die Anzeigeelemente (17) magnetisch an der Schaufläche (10) gehaltert sind.

3. Planungsgerät nach Anspruch 1, dadurch gekennzeichnet, daß die Planungstafel (10) eine Reihe von Löchern (20, 21) aufweist, wobei jeweils mindestens eines einem Kreuzungspunkt der Leiter (12, 13) zugeordnet ist, und daß an der Rückseite der Anzeigeelemente (17) mindestens ein Stift (22, 23) angebracht ist, der in eines der Löcher (20, 21) einsteckbar ist zur Halterung der Anzeigeelemente an der Planungstafel (10).

4. Planungsgerät nach Anspruch 3, dadurch gekennzeichnet, daß der Stift (22, 23) mindestens einen elektrisch leitenden Abschnitt enthält zur Verbindung mindestens eines Leiters (12, 13) mit dem Mikroprozessor (19), wenn der Stift (22, 23) in ein Loch (20, 21) eingesteckt ist.

5. Planungsgerät nach einem der Ansprüche 1 bis 4, dadurch gekennzeichnet, daß die Anzeigeelemente (17) eine Tastatur (25) aufweisen zur Programmierung des Mikroprozessors (19).

6. Planungsgerät nach einem der Ansprüche 1 bis 5, dadurch gekennzeichnet, daß der Rechner (16a) an der Planungstafel (10) angebracht ist.

7. Planungsgerät nach einem der Ansprüche 1 bis 6, dadurch gekennzeichnet, daß der Rechner (16a) mit herkömmlichen Rechnern von EDV-Anlagen kompatibel ist.

## Claims

1. Planning device with a planning board comprising a display surface, the planning board being horizontally and vertically divided to form a grid and provided with a number of manually insertable indicating elements and a device adapted to detect the position of the indicating elements at the display surface, the device being connected to an electronic data processing system, characterized in that the planning board (10) comprises a coordinate network of electrical conductors (12, 13) and the indicating elements (17) each include a LCD-indication (18) and a microprocessor (19) with a programmable memory to control the LCD-indication; and that the microprocessors in positioning the indicating elements at the crossings of the electrical conductors are connected to an electrical power supply and a data processing unit (16a).

2. The planning device according to claim 1, characterized in that the indicating elements (17) are magnetically held on the display surface (10).

3. The planning device according to claim 1, characterized in that the planning board (10) includes a series of holes (20, 21), each being associated with a crossing of the conductors (12, 13), and in that at least a pin (22, 23) is attached to the back side of the indicating elements (17), the pin being insertable into one of the holes (20, 21) to hold the indicating elements at the planning board (10).

4. The planning device according to claim 3, characterized in that the pin (22, 23) includes at least an electrically conductive portion to interconnect at least one conductor (12, 13) and the microprocessor (19) when the pin (22, 23) is inserted into a hole (20, 21).

5. The planning device according to one of the claims 1 to 4, characterized in that the indicating elements (12) include a keyboard (25) for a programming of the microprocessor (19).

6. The planning device according to one of the claims 1 to 5, characterized in that the data processing unit (16a) is attached to the planning board (10).

7. The planning device according to one of the claims 1 to 6, characterized in that the data processing unit (16a) is compatible with conventional computers of data processing arrangements.

## Revendications

1. Dispositif de planification comportant un panneau de planification, qui possède une surface d'affichage et est subdivisé horizontalement et verticalement à la manière d'une grille, et une multiplicité d'éléments d'affichage enfichables à la main et un dispositif, à l'aide duquel le contenu de l'affichage et la position des éléments d'affichage sur la surface d'affichage sont déterminés et qui, pour sa part, est relié à un système électronique de traitement de données, caractérisé en ce que le panneau de planification (10) comporte un réseau de conducteurs électriques (12, 13) disposés suivant les axes des coordonnées, et les éléments d'affichage (17) possèdent un dispositif d'affichage à cristal liquide (18) et respectivement un microprocesseur (19) comportant une mémoire programmable pour la commande du dispositif d'affichage à cristal liquide, et les microprocesseurs sont reliés à une source de courant et à un calculateur (16a), lors de la mise en place des éléments d'affichage au niveau des points d'intersection des conducteurs électriques.

2. Dispositif de planification selon la revendication 1, caractérisé en ce que les éléments d'affichage (17) sont retenus magnétiquement sur la surface d'affichage (10).

3. Dispositif de planification selon la revendication 1, caractérisé en ce que le panneau de planification (10) comporte une série de trous (20, 21), dont l'un au moins est associé respectivement à un point d'intersection des conducteurs (12, 13), et en ce que sur la face arrière des éléments d'affichage (17) est disposée au moins une broche (22, 23), qui peut être enfichée dans l'un des trous (20, 21) pour le maintien des éléments d'affichage sur le panneau de planification (10).

4. Dispositif de planification suivant la revendication 3, caractérisé par le fait que la broche (22, 23) contient au moins une section électriquement conductrice servant à relier au moins un conducteur (12, 13) au microprocesseur (19), lorsque la broche (22, 23) est enfichée dans un trou (20, 21).

5. Appareil de planification selon l'une des revendications 1 à 4, caractérisé en ce que les éléments d'affichage (17) comportent un clavier (25) servant à programmer le microprocesseur (19).

6. Dispositif de planification selon l'une des revendications 1 à 5, caractérisé en ce que le calculateur (16a) est monté sur le panneau de planification (10).

7. Dispositif de planification selon l'une des revendications 1 à 6, caractérisé en ce que le calculateur (16a) est compatible à des calculateurs usuels d'installations de traitement de données.

FIG 1

FIG 2

FIG 3

FIG 4